# EUROPEAN PATENT SPECIFICATION

(11) **EP 3 396 620 B1**
(45) Date of publication and mention of the grant of the patent: **19.08.2020**
(21) Application number: 16878970.9
(22) Date of filing: 22.12.2016
(51) Int. Cl.: G06T 1/00, B60R 21/00, G08G 1/04, H04N 7/18, G06T 3/00, G06T 5/00, G06T 5/50, G08G 1/16

(54) **DISPLAY CONTROL DEVICE AND DISPLAY CONTROL METHOD**
ANZEIGESTEUERUNGSVORRICHTUNG UND ANZEIGESTEUERUNGSVERFAHREN
DISPOSITIF DE COMMANDE D'AFFICHAGE ET PROCÉDÉ DE COMMANDE D'AFFICHAGE

(30) Priority: 25.12.2015 JP 2015253859
(43) Date of publication of application: 31.10.2018
(73) Proprietor: Denso Corporation, Kariya-city Aichi 448-8661 (JP)
(72) Inventor: KOHARA, Kenji, Kariya-city Aichi 448-8661 (JP)
(74) Representative: Plasseraud IP
(86) International application number: PCT/JP2016/088490
(87) International publication number: WO 2017/111084

(56) References cited:
- EP-A1- 2 854 098
- JP-A- 2007 265 281
- JP-A- 2008 158 958
- JP-A- 2013 246 493

## Description

### [Cross Reference to Related Application]

This application is based on Japanese Application No. 2015-253859 filed on December 25, 2015.

### [Technical Field]

The present disclosure relates to a display control device and a display control method for displaying an image of the surroundings of a vehicle on a display device.

### [Background Art]

Conventionally, a technique is known in which a camera attached to a vehicle (i.e., the own vehicle) repeatedly captures images of the surroundings of the own vehicle. The captured images are converted into images as a bird's eye view from above the vehicle (i.e., bird's-eye view images), and the converted bird's-eye view images are displayed on a display device in the vehicle.

According to this technique, when the camera cannot capture an image of the entire surroundings of the vehicle, an image captured at the present time (i.e., a real image) and an image previously captured by the camera (i.e., a history image) are combined. With this combined image, a synthesized image which is a bird's-eye view image is created, and the synthesized image is displayed on the display device.

Further, according to the technique described above, when the shadow of the own vehicle exists in the real image, the shadow is displayed as a residual image in the history image in accordance with the travel of the vehicle. Therefore, an image of the enlarged shadow compared to the actual shadow is displayed in the synthesized image.

Accordingly, in recent years, as disclosed in PTL 1 and PTL 2, a technique is proposed for reducing the risk of the shadow of the own vehicle being enlarged. This technique is conducted by appropriately using the real image and the history image, depending on the presence or absence of the shadow in the real image.

### [Citation List]

### [Patent Literature]

[PTL 1] JP 2013-246493 A
[PTL 2] EP 2 854 098 A1

### [Summary of the Invention]

According to the techniques of PTL 1 and PTL 2 described above, the shadow of the own vehicle being enlarged can be prevented. However, when the shadow itself is prevented from being displayed, the viewer might feel a sense of discomfort.

That is, according to the prior art, the display of every shadow is prevented without distinguishing between the shadow of the own vehicle and the shadows of other non-moving objects (for example, fixed objects) such as structures including buildings and trees. Therefore, a shadow may not be displayed at a position where there should be a shadow of an object such as a structure. Thus, the viewer may feel that there is something wrong with an image displayed on the display device.

The present disclosure has been made in view of these problems. An object thereof is to provide a technique capable of reducing the sense of wrongness of an image displayed on a display device.

### [Solution to Problem]

In a first aspect of the present disclosure, a display control device (9) for capturing a certain imaging area around an own vehicle and displaying it on a display device (7) in the own vehicle. The display control device (9) comprises a captured image acquisition unit (21), a bird's-eye conversion unit (23), a movement amount calculation unit (25), a history image creation unit (27), a display image creation unit (29), and a display processing unit (31). The history image creation unit comprises an own vehicle shadow determination unit (33) and an image correction unit (35).

The captured image acquisition unit repeatedly acquires captured images from a camera mounted on the own vehicle. The bird's-eye conversion unit successively creates captured bird's-eye view images which are bird's-eye view images of the captured images. The captured bird's-eye view images are created by performing bird's-eye view conversion on the captured images acquired repeatedly by the captured image acquisition unit.

The movement amount calculation unit calculates a movement amount of the own vehicle based on vehicle behavior information which indicates a behavior of the own vehicle input from the own vehicle. The history image creation unit creates a history bird's-eye view image by synthesizing captured parts while shifting the position based on the movement amount of the own vehicle. The captured part is at least a part of the captured bird's-eye view image successively created by the bird's-eye conversion unit.

The display image creation unit creates a display bird's-eye view image which is a bird's-eye view image obtained by combining the latest captured bird's-eye view image and the history bird's-eye view image. The display processing unit displays the display bird's-eye view image on the display device.

The own vehicle shadow determination unit determines whether there is a shadow of the own vehicle in the captured bird's-eye view image.

When the shadow of the own vehicle is present in the captured bird's-eye view image, the image correction unit uses the history bird's-eye view image. This creation is conducted by using, as the captured part, a first bird's-eye view image composed of an area of the captured bird's eye view image where the shadow of the own vehicle does not exist. Additionally, when the shadow of the own vehicle is not present in the captured bird's-eye view image, the image correcting unit creates the history bird's-eye view image. For creating the history bird's-eye view image, the image correcting unit uses, as the captured part, a second bird's-eye view image composed of at least a part of the captured bird's-eye view image.

According to this configuration, whether there is a shadow of the own vehicle in the captured bird's-eye view image is determined, and when the shadow of the own vehicle is present in the captured bird's-eye view image, the image correcting unit creates the history bird's-eye view image. The history bird's-eye view image is created by using, as the captured part, a first bird's-eye view image of an area of the captured bird's eye view image where the shadow of the own vehicle does not exist.

Thus, when the captured bird's-eye view image includes a shadow of the own vehicle, it is possible to prevent the captured bird's-eye view image from including the shadow of the own vehicle being synthesized, using the history bird's-eye view image. Accordingly, it is possible to prevent the shadow of the own vehicle being enlarged in the history bird's-eye view image. Therefore, the sense of wrongness of the display bird's-eye view image can be reduced.

On the other hand, when the shadow of the own vehicle is not present in the captured bird's-eye view image, the image correcting unit can create the history bird's-eye view image. When creating, the image correcting unit uses, as the captured part, a second bird's-eye view image of at least a part of the captured bird's-eye view image, for example, an image of an area different from the first bird's-eye view image.

Thus, when there is no shadow of the own vehicle in the captured bird's-eye view image, the following images can be synthesized to create the display bird's-eye view image. Examples of the images to be synthesized are, a captured bird's-eye view image including a shadow of a still object such as a structure other than the shadow of the own vehicle, or a captured bird's-eye view image not including a shadow. For the creation of the display bird's-eye view image, such an image from the example is synthesized with a history bird's-eye view image. Accordingly, for example, when there is actually a shadow of a structure or the like, a display bird's-eye view image having a shadow of a structure or the like can be displayed. Therefore, the sense of discomfort of the display bird's-eye view image can be reduced.

As described above, according to the present disclosure, in the case where the captured bird's-eye view image includes a shadow of the own vehicle and in the case where a shadow of a structure or the like exists, a display bird's-eye view image that gives an impression close to the actual one can be created depending on the case. Therefore, the sense of discomfort in the display bird's-eye view image can be greatly reduced.

It is to be noted that the reference numbers in parentheses in this section and the claims merely indicate the relationships between those elements and the specific means described with respect to the embodiment described below as one mode, and they do not limit the technical scope of the present invention.

### [Brief Description of the Drawings]

The above and other objects, features, and advantages of the present disclosure will become clearer from the following detailed description with reference to the accompanying drawings. In the drawing,
Fig. 1, in its (a) and (b) parts, provides a functional block diagram showing a display control system comprising a display control device according to an embodiment, and a block diagram showing the hardware of an image processing unit.
Fig. 2 is an explanatory diagram showing a storage area corresponding to a display bird's-eye view image displayed on a display device.
Fig. 3 is a flowchart showing a display control process executed by the display control device of an embodiment.
Fig. 4 is an explanatory diagram showing the state of the shadow of the own vehicle in the display bird's-eye view image.
Fig. 5 is an explanatory diagram showing a method of updating a history bird's-eye view image.
Fig. 6 is an explanatory diagram showing the configuration of a display bird's-eye view image.
Fig. 7, in its (a) and (b) parts, provides explanatory diagrams showing the change in the shadows in the display bird's-eye view image when the vehicle moves backward.
Fig. 8, in its (a) and (b) parts, provides explanatory diagrams showing the change in the shadows in the display bird's-eye view image when the vehicle moves forward.

### [Description of the Embodiments]

The present embodiment will be described with reference to the drawings.

### [1. Embodiment]

First, the system configuration of a display control device of the present embodiment will be described.

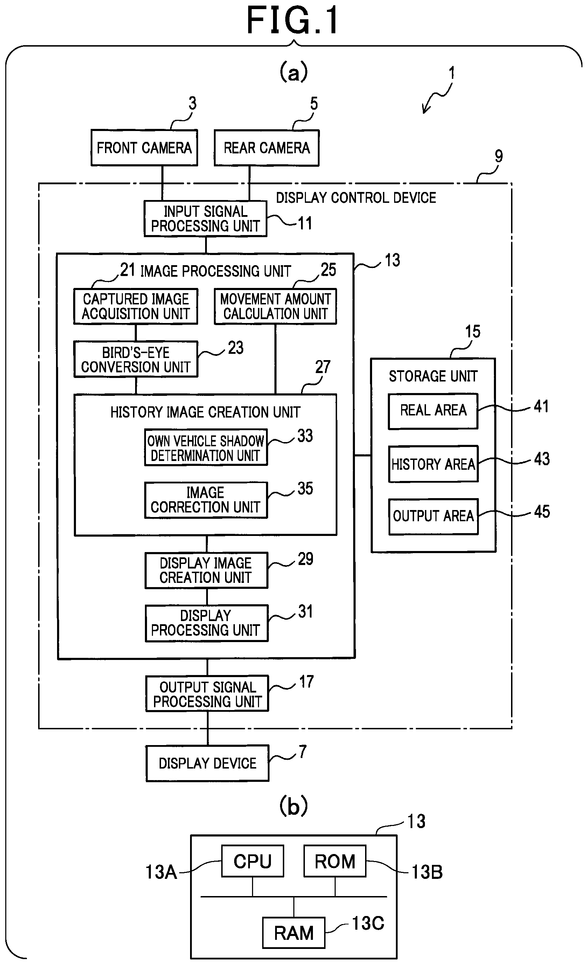

As shown in (a) part of Fig. 1, a display control system 1 in the present embodiment is a system which displays an image of the surroundings of a vehicle. The display control system 1 includes a front camera 3, a rear camera 5, a display device 7, and a display control device 9 mounted on the vehicle. Hereinafter, the vehicle on which the display control system 1 is mounted will be referred to as "own vehicle."

The front camera 3 is a camera fixed near the front end of the own vehicle. The front camera 3 repeatedly captures images of the surroundings of the own vehicle, more specifically, a predetermined imaging area ahead of the own vehicle. Then, the front camera 3 outputs data of the captured images obtained as a result of capturing images to the display control device 9.

Similarly, the rear camera 5 is a camera fixed near the rear end of the own vehicle. The rear camera 5 repeatedly captures images of the surroundings of the own vehicle, more specifically, a predetermined imaging area in the rear of the own vehicle. Then, the rear camera 5 outputs data of the captured images obtained as a result of capturing images to the display control device 9.

Here, an example where the front camera 3 and the rear camera 5 are provided will be described. However, the present embodiment can also be applied to examples where either one of the front camera 3 or the rear camera 5 is provided.

In the present embodiment, the front camera 3 and the rear camera 5 capture the imaging area at constant time intervals (for example, a 1/30 second cycle). In addition, the data of the captured image output to the display control device 9 is converted to a bird's-eye view image by the display control device 9 as described later.

The display device 7 is a display capable of displaying various images. The display device 7 is provided at such a position that a driver or the like inside the vehicle can view the displayed image. In the present embodiment, as described later, the display device 7 displays a bird's-eye view image input from the display control device 9 which shows the periphery of the own vehicle. More specifically, the display device 7 displays the bird's-eye view image indicating an area including the area outside the imaging area of the front and rear cameras 3 and 5. Note that the bird's-eye view image displayed on the display device 7 is a displayed bird's-eye view image.

The display control device 9 is an electronic control device comprising an input signal processing unit 11, an image processing unit 13, a storage unit 15, and an output signal processing unit 17.

The input signal processing unit 11 is an interface for outputting the captured images inputted from the front and rear cameras 3 and 5 to the image processing unit 13.

As shown in (b) part of Fig. 1, the image processing unit 13 includes a microcomputer having a known CPU (Central Processing Unit) 13A, ROM (Read Only Memory) 13B, RAM (Random Access Memory) 13C, and the like.

The various functions of the image processing unit 13 are accomplished by the CPU 13A by executing programs stored in a non-transitory computer readable recording medium. In this example, the ROM 13B corresponds to the non-transitory computer readable recording medium for storing programs. In addition to the ROM 13B, for example, the recording medium includes computer readable electronic media such as DVD-ROM (Digital Versatile Disk Read Only Memory), CD-ROM (Compact Disc Read Only Memory), and a hard disk. Further, by the execution of the program, a method corresponding to a program is executed. The number of microcomputers constituting the image processing unit 13 may be one or greater.

The CPU 13A executes processing in accordance with the programs stored in the ROM 13B. By doing so, the image processing unit 13 functions as a captured image acquisition unit 21, a bird's-eye conversion unit 23, a movement amount calculation unit 25, a history image creation unit 27, a display image creation unit 29, and a display processing unit 31. The history image creation unit 27 also functions as an own vehicle shadow determination unit 33 and an image correction unit 35.

The captured image acquisition unit 21 repeatedly acquires captured images from the front and rear cameras 3 and 5 via the input signal processing unit 11.

The bird's-eye conversion unit 23 performs a known bird's-eye conversion on the captured images repeatedly acquired by the captured image acquiring unit 21. Through this, the bird's-eye conversion unit 23 successively converts the captured images into bird's-eye view images as viewed from above the own vehicle and looking down directly downwards or diagonally downwards. In other words, the bird's-eye conversion unit 23 successively creates captured bird's-eye view images which are bird's-eye view images of the captured images.

The movement amount calculation unit 25 calculates the movement amount of the own vehicle. The calculation is conducted based on vehicle behavior information including information on the shift range input from the own vehicle, vehicle speed information, and information of the steering angle or yaw rate, and the like.

The history image creation unit 27 creates a history bird's-eye view image formed by patching together the captured bird's-eye view images from different captured positions. Such a history bird's-eye view image is created by having a captured part which is a part of the captured bird's-eye view image successively created by the bird's-eye conversion unit 23 synthesized with another image from other captured parts captured while shifting the position based on the movement amount of the own vehicle.

The own vehicle shadow determination unit 33 determines whether there is a shadow in the captured bird's-eye view image. When there is a shadow, the own vehicle shadow determination unit 33 determines whether the shadow is the shadow of the own vehicle.

As will be described in detail later, upon creation of a history bird's-eye view image, when the shadow of the own vehicle is present in the captured bird's-eye view image, the image correction unit 35 creates the history bird's-eye view image. Thus, history bird's-eye view image is created by using, as the captured part, a first bird's-eye view image of an area of the captured bird's eye view image where the shadow of the own vehicle does not exist.

Meanwhile, when there is no shadow of the own vehicle in the captured bird's-eye view image or when the shadow is a shadow of a structure or the like other than the own vehicle, the image correction unit 35 creates the history bird's-eye view image. The history bird's-eye view image is created by using, as the captured part, a second bird's-eye view image which is different from the first bird's-eye view image in the captured bird's-eye view image, as described later.

Note that, the captured bird's-eye view image represents the latest situation of a predetermined area in front and rear of the own vehicle in the surroundings of the own vehicle. In contrast, the history bird's-eye view image does not show the latest situation. However, the history bird's-eye view image is capable of representing the situation of the surroundings of the own vehicle that cannot be covered by the captured bird's-eye view image, for example, the sides of the own vehicle.

The captured bird's-eye view image and the history bird's-eye view image described above are stored in the storage unit 15.

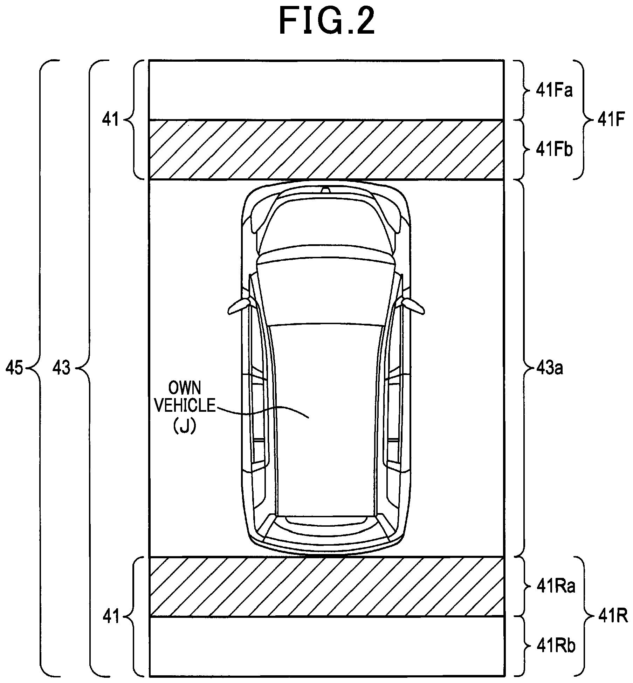

In the storage unit 15, as shown in Fig. 2, a real area 41, a history area 43, and an output area 45 are secured in advance as storage areas for storing various bird's-eye view images. As the storage unit 15, for example, an EEPROM or the like can be adopted. Further, the storage unit 15 may be configured as a part of the storage device of the microcomputer mounted on the image processing unit 13.

These areas 41 to 45 are secured as separate and independent areas in the storage unit 15. However, in Fig. 2, these areas 41 to 45 are shown in a superimposed manner for the ease of understanding the sizes of the bird's-eye view images storable in these areas 41 to 43, in other words, the positions of the bird's-eye view images with respect to the own vehicle.

The real area 41 is an area for storing the latest captured bird's-eye view image created by the bird's-eye conversion unit 23.

The real area 41 is set for both the front and rear of the own vehicle. Among the two, a front real area 41F for storing the captured bird's-eye view image obtained from the captured image captured by the front camera 3 is shown in the upper part of Fig. 2. Further, a rear real area 41R for storing the captured bird's-eye view image obtained from the captured image captured by the rear camera 5 is shown in the lower part of Fig. 2.

The history area 43 is an area for storing the history bird's-eye view image created by the history image creation unit 27. The size of the history bird's-eye view image that can be stored in the history area 43 is set to include the range of the front-rear and left-right directions of the own vehicle. That is, the area centered at the own vehicle that can be represented by the history bird's-eye view image is an area including the entire circumference of the own vehicle.

Note that, the area in the history area 43 shown between the front real area 41F and the rear real area 41R is a side history area 43a for storing the bird's-eye view image at the sides of the own vehicle.

The output area 45 is an area for storing a display bird's-eye view image described later, which is a bird's-eye view image obtained by combining the history bird's-eye view image and the captured bird's-eye view image. In the present embodiment, in order to simplify the explanation, it is assumed that the history area 43 stores a bird's-eye view image having the same range as the output area 45.

Thus, on the display device 7, a displayed bird's-eye view image stored in the output area 45 will be displayed as shown in Fig. 2. At the center of the displayed bird's-eye view image, that is, at the position of the own vehicle, an own vehicle image J which is a plan view of the own vehicle is displayed.

In the present embodiment, as described above, the history bird's-eye view image is created by combining the captured parts of captured bird's-eye view images. However, the position of the captured parts in the captured bird's-eye view images is not fixed.

That is, as shown in Fig. 2, when there is no shadow of the own vehicle, the captured part used for creating the history bird's-eye view image is set to a part of the captured bird's-eye view image in front or rear of the own vehicle including the edge parts on the both sides of the own vehicle. That is, the captured part is set to an adjacent part in the front or rear captured bird's-eye view image. In detail, the captured part is set to the front adjacent part 41Fb or the rear adjacent part 41Ra which are hatched in Fig. 2. The image stored in the front adjacent part 41Fb or the rear adjacent part 41Ra is the second bird's-eye view image.

Meanwhile, when there is a shadow of the own vehicle, the shadow will extend from own vehicle. Therefore, the captured part used for creating the history bird's-eye view image is set far from the own vehicle in the captured bird's-eye view image in front or rear of the vehicle, so that the shadow is not included therein. That is, the captured part is set to be a remote part in the front or rear captured bird's-eye view image. More specifically, the captured part is set to be a front remote part 41Fa or the rear remote part 41Rb. The image stored in the front remote part 41Fa or the rear remote part 41Rb is the first bird's-eye view image.

The captured part has a constant shape irrespective of the place to be set. That is, the shape is fixed. In other words, the captured part has a rectangular shape extending in the lateral direction of the own vehicle. Specifically, the front adjacent part 41Fb, the rear adjacent part 41Ra, the front remote part 41Fa, and the rear remote part 41Rb have the same rectangular shape extending in the lateral direction of the own vehicle.

The display image creation unit 29 creates a display bird's-eye view image which is a bird's-eye view image obtained by combining the latest captured bird's-eye view image and the history bird's-eye view image. The display bird's-eye view image created by the display image creation unit 29 is stored in the output area 45 of the storage unit 15.

The display processing unit 31 makes the display device 7 displays the display bird's-eye view image via the output signal processing unit 17. The bird's-eye view image is stored in the output area 45 of the storage unit 15.

These are the functions of the image processing unit 13. The image processing unit 13 performs these functions by executing a display control process described later.

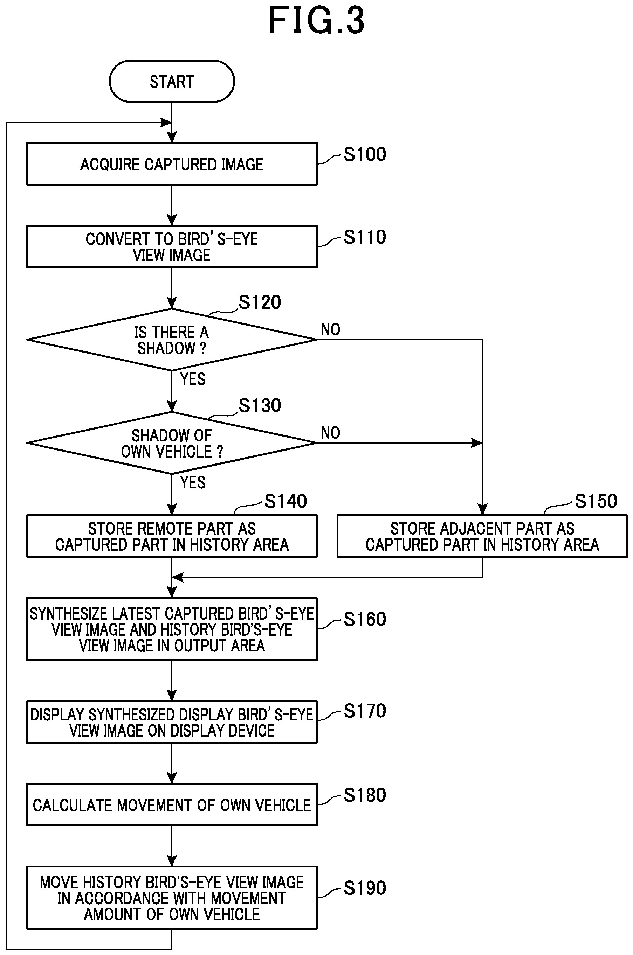

The output signal processing unit 17 is an interface for outputting the display bird's-eye view image to the display device 7. The bird's-eye view image is created by the display image creation unit 29 of the image processing unit 13. Next, the image control process executed by the image processing unit 13 will be described with reference to the flowchart of Fig. 3.

This display control process is started when the ignition switch of the own vehicle is turned on.

Here, the case where the own vehicle is caused to move back (i.e., move backward) will be described as an example. However, the process executed when the own vehicle moves forward is basically the same except that the moving direction is reversed. In Fig. 3, the steps are denoted by S.

First, in the case where the shift position of the own vehicle is reverse (i.e., retreat position), in step 100, the captured image acquisition unit 21 acquires one latest captured image from each of the front and rear cameras 3 and 5.

In the following step 110, the bird's-eye conversion unit 23 performs a known bird's-eye conversion on the two latest captured images acquired in step 100 to create front and rear of the captured bird's-eye view images.

In the following step 120, the own vehicle shadow determination unit 33 determines whether there is a shadow in the rear (in the traveling direction) captured bird's-eye view image. That is, the determination is conducted to the rear captured bird's-eye view image corresponding to the rear real area 41R including the rear adjacent part 41Ra and the rear remote part 41Rb. When the result of the determination is affirmative, the process proceeds to step 130. In contrast, when the result is negative, the process proceeds to step 150.

Whether a shadow is present in the rear captured bird's-eye view image can be determined by a known method. An example of such known method is the shadow detection technique described in JP 2010-237979 A.

The reason for carrying out the shadow determination only on the rear (in the traveling direction) captured bird's-eye view image is that it is only in the rear (in the traveling direction) captured bird's-eye view image the shadow of the own vehicle is accumulated in the history bird's-eye view image. That is, since the captured bird's eye view image in the front direction, which is not the traveling direction is not accumulated in the history bird's-eye view image, but it is displayed as it is.

In step 130, the own vehicle shadow determination unit 33 determines whether the shadow in the captured bird's-eye view image is the shadow of the own vehicle. Specifically, it is determined whether there is a shadow of the own vehicle in the part of the captured bird's-eye view image corresponding to the area of the rear adjacent part 41Ra. When the result of the determination is affirmative, the process proceeds to step 140. In contrast, when the result is negative, the process proceeds to step 150.

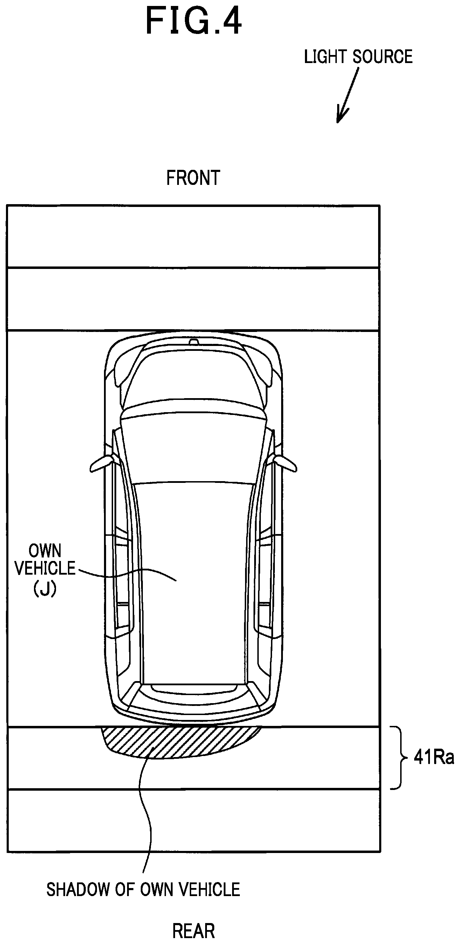

Whether the shadow is of the own vehicle can be determined based on whether the shadow stems from the own vehicle. For example, as shown in Fig. 4, when there is a light source (for example, the sun) in the right front direction, a shadow is formed on the left rear side of the own vehicle. Since such shadow always extends from the own vehicle, when the shadow extends from the rear end of the own vehicle, it can be determined that the shadow extends from the own vehicle.

In the actual determination, the upper end (i.e., the front end) of the rear adjacent part 41Ra in Fig. 4 in the range of the width of the own vehicle is set as the rear end of the own vehicle. When the shadow extends from somewhere in this front end range, it is set that the shadow extends from the own vehicle.

Whether the shadow "extends from somewhere in the range of the front end of the rear adjacent part 41Ra" can be determined based on whether a predetermined number of pixels in the width direction among the pixels of one or a plurality of rows adjacent to the front end in the range has values indicative of a shadow.

In step 140, there is a shadow of the own vehicle in the captured bird's-eye view image of the part corresponding to the area of the rear adjacent part 41Ra. Therefore, the captured bird's-eye view image of the part corresponding to the rear remote part 41Rb (i.e., the first bird's-eye view image) not including a shadow of the own vehicle is adopted as the captured part used by the history image creation unit 27 for creating the history bird's-eye view image. Then, the captured bird's-eye view image is stored in the history area 43.

On the other hand, in step 150, there is no shadow of the own vehicle in the rear captured bird's-eye view image or in the captured bird's-eye view image of the part corresponding to the area of the rear adjacent part 41Ra. Therefore, the captured bird's-eye view image of the part corresponding to the area of the rear adjacent part 41Ra (i.e., the second bird's-eye view image) which is close to the own vehicle and does not include a shadow of the own vehicle is adopted as the captured part used by the history image creation unit 27 for creating the history bird's-eye view image, and stored in the history area 43.

In this manner, the captured part is set at a different position depending on whether the shadow of the own vehicle exists in the captured bird's-eye view image.

Further, as will be described later, the process from step 100 to step 190 is repeatedly executed while the shift position of the own vehicle is reverse.

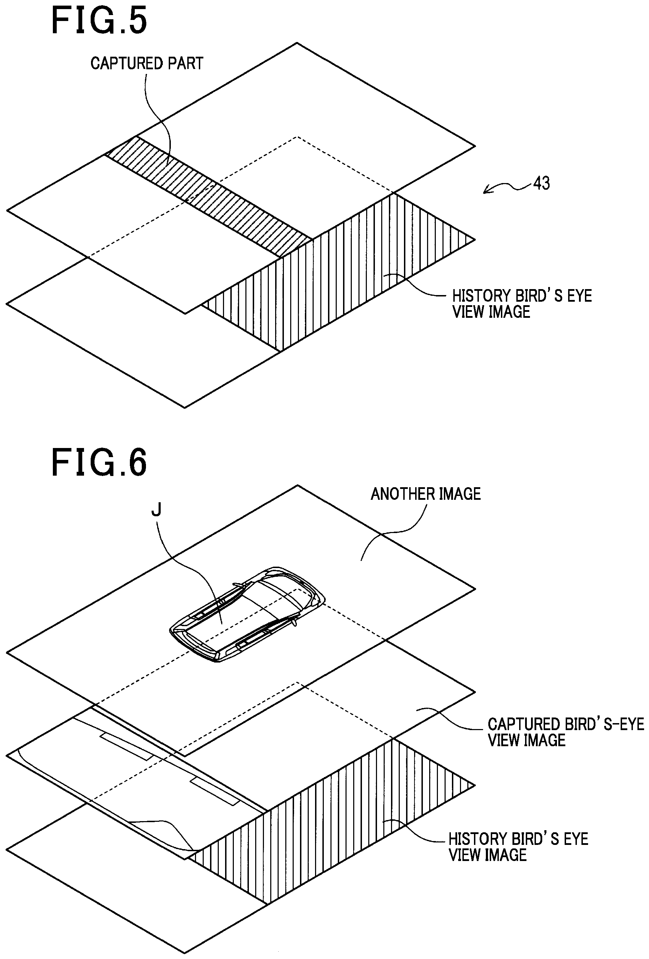

In a state where no history bird's-eye view image is stored in the history area 43, for example, in the process of the first cycle, the process of step 140 or 150 becomes a process of storing the captured part as the history bird's-eye view image. In a state where a history bird's-eye view image is stored in the history area 43, for example, in the process of the second or later cycle, an update of the history bird's-eye view image will be conducted. The history bird's-eye view image will be updated by overwriting the history bird's-eye view image in the history area 43 with the latest captured part, as shown in Fig. 5.

Further, in the present embodiment, the cycle at which the process of steps 100 to 190 is executed is related with the movement amount of the own vehicle. Specifically, each time a tire of the own vehicle rotates by an amount corresponding to the longitudinal width of the captured part in the captured bird's eye view image, a process of one cycle is performed. That is, the longitudinal width is the width in the direction of the vertical direction of the own vehicle (for example, 5 pixels). Therefore, in the history area 43, the past and latest captured parts are arranged without a gap. The history area 43 is designed to prevent from blanks from being made in the history bird's-eye view image, that is, to prevent from unrecorded captured parts from being formed.

In step 160, the display image creation unit 29 of the image processing unit 13 creates a display bird's-eye view image which is a bird's-eye view image. The bird's-eye view image is obtained by combining, in the output area 45, the latest captured bird's-eye view image stored in the real area 41 and the history bird's-eye view image stored in the history area 43.

Specifically, as shown in Fig. 6, the image processing unit 13 first stores the history bird's-eye view image stored in the history area 43. Then, the thus stored history bird's-eye view image is stored in the output area 45. After that, the image processing unit 13 stores the latest captured bird's-eye view image stored in the real area 41 in the output area 45. By doing so, the latest captured bird's-eye view image overwrites the history bird's-eye view image. In the present embodiment, on top of that, other images including the own vehicle image J and a guideline are further superimposed and then stored.

In the following step 170, the display processing unit 31 makes the display device 7 to display the display bird's-eye view image stored in the output area 45 via the output signal processing unit 17.

In the following step 180, the movement amount calculation unit 25 calculates the movement amount of the own vehicle. That is, the movement amount calculation unit 25 calculates the changes in position and direction, based on the vehicle behavior information input from the own vehicle. For example, the movement amount of the own vehicle is calculated based on the vehicle behavior information including information on the shift range, vehicle speed information, and information on the steering angle or yaw rate. Here, the movement amount indicates the movement amount of the own vehicle in the time period from the acquisition timing of the previous captured image to the acquisition timing of the current captured image. Specifically, the movement amount in the acquisition interval of captured images.

In the following step 190, the history bird's-eye view image is moved in the history area 43 based on the movement amount of the own vehicle.

The image processing unit 13 changes the position of the history bird's-eye view image stored in the history area 43 with respect to the own vehicle based on the movement amount of the own vehicle so as to correspond to the current position of the own vehicle. Accordingly, an image outside the imaging range, which did not exist at the beginning of the process of Fig. 3, increases. Further, for example, when rotation is included in the movement of the own vehicle, the history bird's-eye view image is rotated corresponding to the rotation amount of the own vehicle.

After executing the processing of step 190, the image processing unit 13 returns to the above-described step 100. Then, the image processing unit 13 repeats the processing of step 110 and the subsequent steps.

It should be noted that the display bird's-eye view image should be designed not to display the display device 7 at a stage where image data is not accumulated sufficiently in the history area 43 as the image data of the display bird's-eye view image to be displayed on the display device 7.

Next, the image displayed on the display screen of the display device 7 by the above-described display control process will be described.

### <In the case of backward movement>

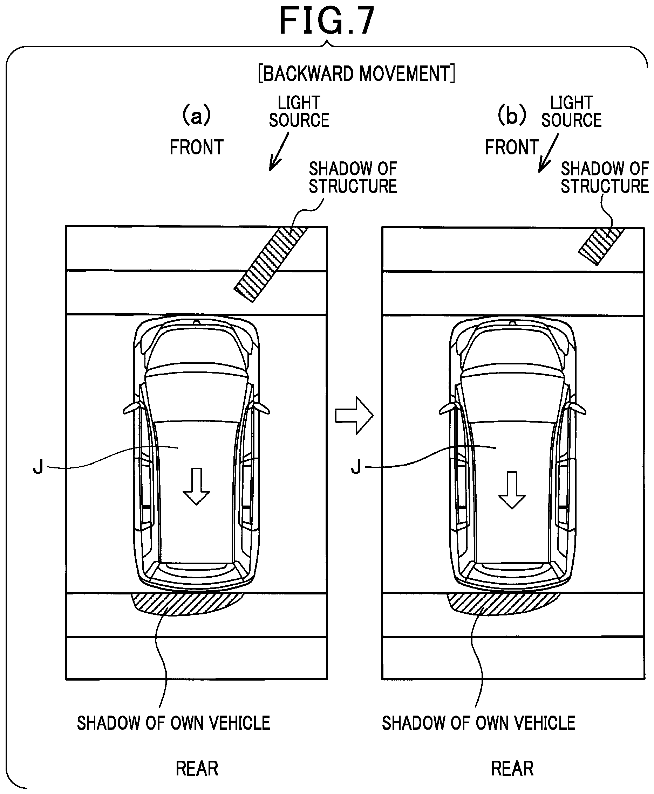

As shown in (a) and (b) parts of Fig.7, a case is assumed where the own vehicle moves backward when there is a light source in the front right direction of the own vehicle.

Further, for example, as shown in the (a) part of Fig. 7, a case where a shadow of a structure is present in the front captured bird's-eye view image of the own vehicle and a shadow of the own vehicle is present in the rear captured bird's-eye view image of the own vehicle, is taken as an example.

In the case shown in the (a) part of Fig. 7, in the display bird's-eye view image displayed on the display device 7, the latest captured bird's-eye view image captured by the front camera 3 is displayed in front of the own vehicle (i.e., the own vehicle image J). The latest captured bird's-eye view image includes a shadow of the structure but it is displayed as it is.

Meanwhile, the latest captured bird's-eye view image captured by the rear camera 5 is displayed behind the own vehicle. The latest captured bird's-eye view image includes a shadow of the own vehicle but it is displayed as it is.

Next, when the own vehicle moves backward, a display bird's-eye view image as shown in (b) part of Fig. 7 is displayed.

That is, the latest captured bird's-eye view image captured by the front camera 3 is displayed in front of the own vehicle. However, the shadow of the structure is displayed at a position remote from the own vehicle in accordance with the movement of the own vehicle.

Meanwhile, the latest captured bird's-eye view image captured by the rear camera 5 is displayed behind the own vehicle. The latest captured bird's-eye view image includes a shadow of the own vehicle but it is displayed as it is.

An image data of the rear adjacent part 41Ra including a shadow of the own vehicle will not be stored in the history area 43 by the above-described display control process. Accordingly, in the displayed bird's-eye view image, a part of the shadow of the own vehicle (for example, the left end of the shadow) will not be displayed at the side of the own vehicle image J.

### <In the case of forward movement>

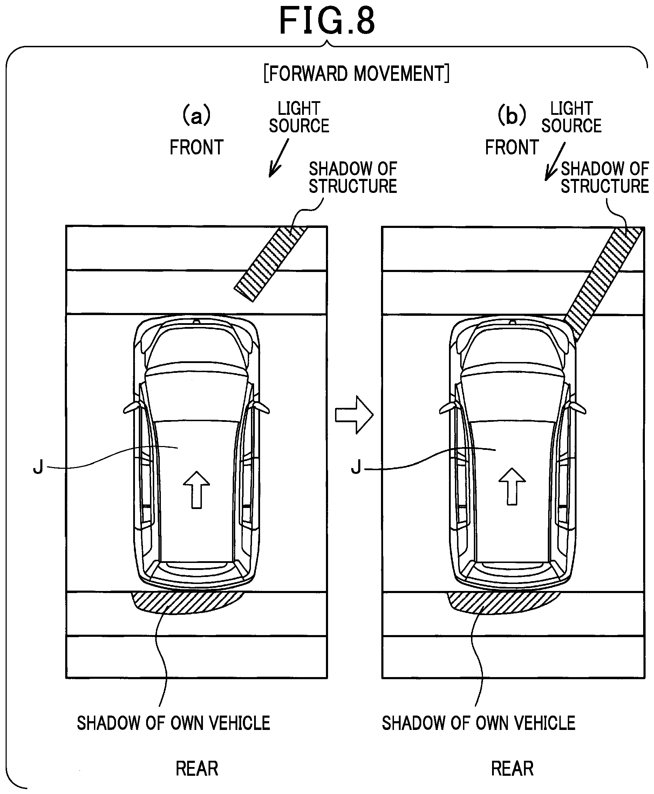

As shown in (a) and (b) parts of Fig. 8, a case is assumed where the own vehicle moves forward when there is a light source in the front right direction of the own vehicle.

Further, for example, as shown in the (a) part of Fig. 8, the case where a shadow of a structure is present in the front captured bird's-eye view image of the own vehicle and a shadow of the own vehicle is present in the rear captured bird's-eye view image of the own vehicle, is taken as an example.

In the case shown in the (a) part of Fig. 8, in the display bird's-eye view image displayed on the display device 7, the latest captured bird's-eye view image captured by the front camera 3 is displayed in front of the own vehicle. The latest captured bird's-eye view image includes a shadow of the structure but it is displayed as it is.

Meanwhile, the latest captured bird's-eye view image captured by the rear camera 5 is displayed behind the own vehicle. The latest captured bird's-eye view image includes a shadow of the own vehicle but it is displayed as it is. Next, when the own vehicle moves forward, a display bird's-eye view image as shown in (b) part of Fig. 8 is displayed.

That is, the latest captured bird's-eye view image captured by the front camera 3 is displayed in front of the own vehicle. However, the shadow of the structure comes closer to the own vehicle in accordance with the movement of the own vehicle. Specifically, since the shadow of the structure is the same as, for example, characters and patterns or the like on the road surface, the latest captured bird's-eye view image captured by the front camera 3 is displayed as it is.

A history bird's-eye view image obtained by moving a past captured bird's-eye view image is displayed in a side area of the own vehicle. However, this history bird's-eye view image includes the shadow of the structure similar to a pattern or the like on the road surface. In other words, the shadow of the structure is displayed in the display bird's-eye view image at a position corresponding to the movement amount in accordance with the movement of the vehicle.

Meanwhile, the latest captured bird's-eye view image captured by the rear camera 5 is displayed behind the own vehicle. The latest captured bird's-eye view image includes a shadow of the own vehicle but it is displayed as it is.

According to the present embodiment described above in detail, the following effects can be obtained.
(1a) In the present embodiment, it is determined whether there is a shadow of the own vehicle in the captured bird's-eye view image. When the shadow of the own vehicle is present in the captured bird's-eye view image, the history bird's-eye view image is created. The history bird's-eye view image is created using, as the captured part, the first bird's-eye view image of an area which is remote from the own vehicle and does not include the shadow of the own vehicle.
   Thus, when the captured bird's-eye view image includes a shadow of the own vehicle, it is possible to prevent the captured bird's-eye view image including the shadow of the own vehicle being synthesized with the history bird's-eye view image. Accordingly, it is possible to prevent the shadow of the own vehicle being enlarged in the history bird's-eye view image. Therefore, the sense of wrongness of the display bird's-eye view image can be reduced.
   Meanwhile, when the shadow of the own vehicle is not present in the captured bird's-eye view image, the history bird's-eye view image is created. The history bird's-eye view image is created using, as the captured part, the second bird's-eye view image of an area of the shadow of the own vehicle which is close to the own vehicle.
   Thus, when there is no shadow of the own vehicle in the captured bird's-eye view image, for example, a captured bird's-eye view image including a shadow of a structure other than the shadow of the own vehicle or a captured bird's-eye view image not including a shadow and a history bird's-eye view image can be synthesized to create the display bird's-eye view image. Accordingly, for example, when there is actually a shadow of a structure or the like, a display bird's-eye view image having a shadow of a structure or the like can be displayed. Therefore, the sense of discomfort of the display bird's-eye view image can be reduced.
   As described above, according to the present embodiment, in the case where the captured bird's-eye view image includes a shadow of the own vehicle and in the case where a shadow of a structure or the like exists, a display bird's-eye view image that gives an impression close to the actual one can be created depending on the case. Therefore, the sense of discomfort in the display bird's-eye view image can be greatly reduced.
(1b) According to the present embodiment, it is determined whether there is a shadow in the captured bird's-eye view image, and if there is a shadow, it is determined whether the shadow is the shadow of the own vehicle. Accordingly, the shadow of the own vehicle can be easily detected.
(1c) According to the present embodiment, since a shadow extending from the own vehicle is determined as the shadow of the own vehicle, the shadow of the own vehicle can be accurately detected.
(1d) According to the present embodiment, a shadow located at a position remote from the own vehicle is determined as the shadow of a structure or the like other than the own vehicle. Therefore, the shadow of a still object other than the own vehicle such as a structure, for example, a building, or a tree can be accurately detected.
(1e) According to the present embodiment, the captured bird's-eye view image is divided into an adjacent part close to the own vehicle and a remote part far from the own vehicle than the adjacent part. Further, the image of the adjacent part is assumed as the second bird's-eye view image. The image of the remote part is assumed as the first bird's-eye view image.

Accordingly, a history bird's-eye view image is created by using the first bird's-eye view image when there is a shadow of the own vehicle, and by using the second bird's-eye view image when there is no shadow of the own vehicle. By this creation, a display bird's-eye view image with less sense of discomfort can be created.

### [1-5. Relationship between the claims and the embodiment]

The display device 7, the display control device 9, the cameras 3 and 5, the captured image acquisition unit 21, the bird's-eye conversion unit 23, the movement amount calculation unit 25, the history image creation unit 27, the display image creation unit 29, the display processing unit 31, the own vehicle shadow determination unit 33, and the image correction unit 35 in the present embodiment correspond to examples of the display device, the display control device, the camera, the captured image acquisition unit, the bird's-eye conversion unit, the movement amount calculation unit, the history image creation unit, the display image creation unit, the display processing unit, the own vehicle shadow determination unit, and the image correction unit of the present invention.

### [2. Other embodiments]

An embodiment of the present invention has been described above. However, the present invention is not limited to the above-described embodiment, and various modes can be adopted as long as they fall within the technical scope of the present invention.
(2a) For example, in the above-described embodiment, the display bird's-eye view image is created using front and rear cameras. However, needless to say, the present invention is also applicable to embodiments which use only one of the front camera or the rear camera.
(2b) In addition, the own vehicle shadow determination unit 33 may determine that the shadow is the shadow of the own vehicle when a shadow extending from the own vehicle is continuously displayed in the captured bird's-eye view image for a predetermined time period. This improves the accuracy in detecting the shadow of the own vehicle.
(2c) The function of one constituent element in the above embodiment may be distributed to a plurality of constituent elements, or the functions of a plurality of constituent elements may be integrated into one constituent element. Further, a part of the configuration of the above embodiment may be omitted. Furthermore, at least a part of the configuration of the above embodiment may be added or substituted in the configuration of the other embodiments described above. The embodiments of the present invention include any mode included in the technical spirit specified by the language of the claims.
(2d) In addition to the above-described display control device, the present invention may be accomplished in various forms. For example, a system comprising the display control device, a program for causing a computer to function as the display control device, a non-transitory computer readable recording medium such as a semiconductor memory storing the program, and a method for controlling a vehicle.

In addition, some or all of the functions executed by the display control device may be configured in a hardware manner, for example, by one or more ICs or the like.

Although the present disclosure is described based on examples, it should be understood that the present disclosure is not limited to the examples and structures. The present disclosure encompasses various modifications and variations within the scope of equivalence as defined by the appended claims.

### [Partial Reference Signs List]

7 ... Display device9 ... Display control device3 ... Front camera5 ... Rear camera13 ... Image processing unit15 ... Storage unit21 ... captured image acquisition unit23 ... Bird's-eye conversion unit25 ... Movement amount calculation unit27 ... History image creation unit29 ... Display image creation unit31 ... Display processing unit33 ... Own vehicle shadow determination unit35 ... Image correction unit

## Claims

1. A display control device (9) for capturing a certain imaging area around an own vehicle and displaying it on a display device (7) in the own vehicle, comprising:
a captured image acquisition unit (21) which acquires successive first and second images from a camera (3, 7) mounted on the own vehicle;
a bird's-eye view conversion unit (23) which performs bird's-eye view conversion of each of the first and second images to thereby successively create first and second bird's-eye view images, respectively;
a movement amount calculation unit (25) which calculates a movement amount of the own vehicle based on vehicle behavior information indicative of a behavior of the own vehicle input from the own vehicle;
a history image creation unit (27) which comprises:
a vehicle shadow determination unit (33) which determines whether:
there is a shadow in a predetermined first region of the first bird's-eye view image (S120); and
the shadow is a shadow of the own vehicle (S130); and
an image correction unit (35) which:
sets the predetermined first region in the first bird's-eye view image as a target region upon determining that there is no shadow in the predetermined first region or there is a shadow in the predetermined first region and the shadow is not a shadow of the own vehicle (S150);
sets, in the first bird's-eye view image, a predetermined second region different from the first region as the target region upon determining that there is a shadow in the first region and the shadow is a shadow of the own vehicle (S140); and
shifts the target region of the first bird's-eye view image in a movement direction of the vehicle by the movement amount to thereby create a history bird's-eye view image;
a display image creation unit (29) which synthesizes the history bird's-eye view image with the second bird's-eye view image to thereby create a display bird's-eye view image; and
a display processing unit (31) which displays the display bird's-eye view image on the display device.

2. The display control device according to claim 1, wherein the own vehicle shadow determination unit (33) determines a shadow extending from the own vehicle as a shadow of the own vehicle.

3. The display control device according to claim 2, wherein the own vehicle shadow determination unit (33) determines that the shadow is a shadow of the own vehicle when a shadow extending from the own vehicle is continuously displayed in the captured bird's-eye view image for a certain time period.

4. The display control device according to any one of claims 1 to 3, wherein the own vehicle shadow determination unit (33) determines that there is a shadow in the predetermined first region and the shadow is not a shadow of the own vehicle when the shadow is located at a position remote from the own vehicle.

5. The display control device according to any one of claims 1 to 4, wherein the history image creation unit (27) divides the first bird's eye image into an adjacent part close to the own vehicle and a remote part farther from the own vehicle than the adjacent part, and classifies an image of the first region and an image of the remote part as the second region.

6. A display control method for capturing a certain imaging area around an own vehicle and displaying it on a display device in the own vehicle, comprising:
a captured image acquisition step of acquiring successive first and second images from a camera mounted on the own vehicle;
a bird's-eye view conversion step of performing bird's-eye view conversion of each of the first and second images to thereby successively create first and second bird's-eye images, respectively;
a movement amount calculation step of calculating a movement amount of the own vehicle based on vehicle behavior information indicative of a behavior of the own vehicle input from the own vehicle;
a history image creation step comprising of:
a vehicle shadow determination step of determining whether:
there is a shadow in a predetermined first region of the first bird's-eye view image; and
the shadow of the own vehicle; and
an image correction step of:
setting the predetermined first region in the first bird's-eye view image as a target region upon determining that there is no shadow in the predetermined first region or there is a shadow in the predetermined first region and the shadow is not a shadow of the own vehicle;
setting, in the first bird's-eye view image, a predetermined second region different from the first region as the target region upon determining that there is a shadow in the first region and the shadow is a shadow of the own vehicle; and
shifting the target region of the first bird's-eye view image in a movement direction of the vehicle by the movement amount to thereby create a history bird's-eye view image;
a display image creation step of synthesizing the history bird's-eye view image with the second bird's-eye view image to thereby create a display bird's-eye view image; and
a display processing step of displaying the display bird's-eye view image on the display device.,

7. The display control method according to claim 6, wherein the vehicle shadow determination step determines that there is a shadow in the predetermined first region and the shadow is not a shadow of the own vehicle when the shadow is located at a position remote from the own vehicle.

8. The display control method according to claim 6 or 7, wherein the history image creation step divides the first bird's eye image into an adjacent part close to the own vehicle and a remote part farther from the own vehicle than the adjacent part, and classifies an image of the first region and an image of the remote part as the second region.

## Patentansprüche

1. Anzeigesteuervorrichtung (9) zum Aufnehmen eines bestimmten Abbildungsbereichs in der Umgebung eines eigenen Fahrzeugs und zum Anzeigen des Abbildungsbereichs auf einer Anzeigeeinrichtung (7) im eigenen Fahrzeug, mit:
einer Einheit (21) zum Erhalten eines aufgenommenen Bildes, die aufeinanderfolgende erste und zweite Bilder von einer am eigenen Fahrzeug montierten Kamera (3, 7) erhält;
einer Vogelperspektivenumwandlungseinheit (23), die eine Vogelperspektivenumwandlung jedes unter den ersten und zweiten Bildern ausführt, um nacheinander erste und zweite Bilder aus der Vogelperspektive zu erzeugen;
einer Bewegungsmaßberechnungseinheit (25), die ein Bewegungsmaß des eigenen Fahrzeugs basierend auf Information über das Fahrzeugverhalten berechnet, die ein Verhalten des eigenen Fahrzeugs anzeigt und vom eigenen Fahrzeug eingegeben wird;
einer Einheit zum Erzeugen historischer Bilder (27), die aufweist:
eine Einheit (33) zum Bestimmen eines Schattens des eigenen Fahrzeugs, die bestimmt, ob:
sich ein Schatten in einem vorgegebenen ersten Bereich des ersten Bildes aus der Vogelperspektive befindet (S120); und
der Schatten ein Schatten des eigenen Fahrzeugs ist (S130); und
eine Bildkorrektureinheit (35), die:
den vorgegebenen ersten Bereich im ersten Bild aus der Vogelperspektive als einen Zielbereich festlegt, wenn bestimmt wird, dass sich kein Schatten in dem vorgegebenen ersten Bereich befindet oder dass sich ein Schatten in dem vorgegebenen ersten Bereich befindet und der Schatten kein Schatten des eigenen Fahrzeugs ist (S150);
im ersten Bild aus der Vogelperspektive einen vom ersten Bereich verschiedenen vorgegebenen zweiten Bereich als den Zielbereich festlegt, wenn bestimmt wird, dass sich im ersten Bereich ein Schatten befindet und der Schatten ein Schatten des eigenen Fahrzeugs ist (S140); und
den Zielbereich des ersten Bildes aus der Vogelperspektive um das Bewegungsmaß in eine Bewegungsrichtung des Fahrzeugs versetzt, um dadurch ein historisches Bild aus der Vogelperspektive zu erzeugen;
einer Anzeigebilderzeugungseinheit (29), die das historische Bild aus der Vogelperspektive mit dem zweiten Bild aus der Vogelperspektive synthetisiert, um dadurch ein Anzeigebild aus der Vogelperspektive zu erzeugen; und
einer Anzeigeverarbeitungseinheit (31), die das Anzeigebild aus der Vogelperspektive auf der Anzeigeeinrichtung anzeigt.

2. Anzeigesteuervorrichtung nach Anspruch 1, wobei die Einheit (33) zum Bestimmen eines Schattens des eigenen Fahrzeugs einen sich vom eigenen Fahrzeug erstreckenden Schatten als Schatten des eigenen Fahrzeugs bestimmt.

3. Anzeigesteuervorrichtung nach Anspruch 2, wobei die Einheit (33) zum Bestimmen eines Schattens des eigenen Fahrzeugs bestimmt, dass der Schatten ein Schatten des eigenen Fahrzeugs ist, wenn ein sich vom eigenen Fahrzeug erstreckender Schatten in dem aufgenommenen Bild aus der Vogelperspektive für eine bestimmte Zeitdauer kontinuierlich angezeigt wird.

4. Anzeigesteuervorrichtung nach einem der Ansprüche 1 bis 3, wobei die Einheit (33) zum Bestimmen eines Schattens des eigenen Fahrzeugs bestimmt, dass sich in dem vorgegebenen ersten Bereich ein Schatten befindet und der Schatten kein Schatten des eigenen Fahrzeugs ist, wenn der Schatten sich an einer vom eigenen Fahrzeug entfernten Position befindet.

5. Anzeigesteuervorrichtung nach einem der Ansprüche 1 bis 4, wobei die Einheit (27) zum Erzeugen historischer Bilder das erste Bild aus der Vogelperspektive in einen benachbarten Teil in der Nähe des eigenen Fahrzeugs und einen entfernten Teil teilt, der weiter vom eigenen Fahrzeug entfernt ist als der benachbarte Teil, und ein Bild des ersten Bereichs und ein Bild des entfernten Teils als den zweiten Bereich klassifiziert.

6. Anzeigesteuerverfahren zum Aufnehmen eines bestimmten Abbildungsbereichs in der Umgebung eines eigenen Fahrzeugs und zum Anzeigen des Abbildungsbereichs auf einer Anzeigeeinrichtung im eigenen Fahrzeug, mit:
einem Schritt zum Erhalten aufgenommener Bilder zum Erhalten aufeinanderfolgender erster und zweiter Bilder von einer am eigenen Fahrzeug montierten Kamera;
einem Vogelperspektivenumwandlungsschritt zum Ausführen einer Vogelperspektivenumwandlung jedes unter den ersten und zweiten Bildern, um aufeinanderfolgend erste und zweite Bilder aus der Vogelperspektive zu erzeugen;
einem Bewegungsmaßberechnungsschritt zum Berechnen eines Bewegungsmaßes des eigenen Fahrzeugs basierend auf Fahrzeugverhaltensinformation, die ein Verhalten des eigenen Fahrzeugs anzeigt und vom eigenen Fahrzeug eingegeben wird;
einem Schritt zum Erzeugen historischer Bilder, der aufweist:
einen Fahrzeugschattenbestimmungsschritt zum Bestimmen, ob:
sich in einem vorgegebenen ersten Bereich des ersten Bildes aus der Vogelperspektive ein Schatten befindet; und
der Schatten ein Schatten des eigenen Fahrzeugs ist; und
einen Bildkorrekturschritt zum:
Festlegen des vorgegebenen ersten Bereichs in dem ersten Bild aus der Vogelperspektive als ein Zielbereich, wenn bestimmt wird, dass sich kein Schatten in dem vorgegebenen ersten Bereich befindet oder dass sich ein Schatten in dem vorgegebenen ersten Bereich befindet und der Schatten kein Schatten des eigenen Fahrzeugs ist;
Festlegen eines vom ersten Bereich verschiedenen vorgegebenen zweiten Bereichs im ersten Bild aus der Vogelperspektive als der Zielbereich, wenn bestimmt wird, dass sich ein Schatten im ersten Bereich befindet und der Schatten ein Schatten des eigenen Fahrzeugs ist; und
Versetzen des Zielbereichs des ersten Bildes aus der Vogelperspektive in einer Bewegungsrichtung des Fahrzeugs um das Bewegungsmaß, um dadurch ein historisches Bild aus der Vogelperspektive zu erzeugen;
einem Anzeigebilderzeugungsschritt zum Synthetisieren des historischen Bildes aus der Vogelperspektive mit dem zweiten Bild aus der Vogelperspektive, um ein Anzeigebild aus der Vogelperspektive zu erzeugen; und
einem Anzeigeverarbeitungsschritt zum Anzeigen des Anzeigebildes aus der Vogelperspektive auf der Anzeigeeinrichtung.

7. Anzeigesteuerverfahren nach Anspruch 6, wobei im Fahrzeugschattenbestimmungsschritt bestimmt wird, dass sich ein Schatten in dem vorgegebenen ersten Bereich befindet und der Schatten kein Schatten des eigenen Fahrzeugs ist, wenn sich der Schatten an einer vom eigenen Fahrzeug entfernten Position befindet.

8. Anzeigesteuerverfahren nach Anspruch 6 oder 7, wobei im Schritt zum Erzeugen historischer Bilder das erste Bild aus der Vogelperspektive in einen benachbarten Teil in der Nähe des eigenen Fahrzeugs und einen entfernten Teil geteilt wird, der weiter vom eigenen Fahrzeug entfernt ist als der benachbarte Teil, und ein Bild des ersten Bereichs und ein Bild des entfernten Teils als der zweite Bereich klassifiziert wird.

## Revendications

1. Dispositif de commande d'affichage (9) pour capturer une certaine zone d'imagerie autour d'un propre véhicule et l'afficher sur un dispositif d'affichage (7) dans le propre véhicule, comprenant :
une unité d'acquisition d'image capturée (21) qui acquiert des première et seconde images successives à partir d'une caméra (3, 7) montée sur le propre véhicule ;
une unité de conversion de vue à vol d'oiseau (23) qui effectue une conversion de vue à vol d'oiseau de chacune des première et seconde images pour ainsi créer successivement des première et seconde images de vue à vol d'oiseau, respectivement ;
une unité de calcul de quantité de déplacement (25) qui calcule une quantité de déplacement du propre véhicule sur la base d'informations de comportement de véhicule indicatives d'un comportement du propre véhicule entrées depuis le propre véhicule ;
une unité de création d'image historique (27) qui comprend :
une unité de détermination d'ombre de véhicule (33) qui détermine si :
il y a une ombre dans une première région prédéterminée de la première image de vue à vol d'oiseau (S120) ; et
l'ombre est une ombre du propre véhicule (S130) ; et
une unité de correction d'image (35) qui :
définit la première région prédéterminée dans la première image de vue à vol d'oiseau comme une région cible lors de la détermination selon laquelle il n'y a pas d'ombre dans la première région prédéterminée ou il y a une ombre dans la première région prédéterminée et l'ombre n'est pas une ombre du propre véhicule (S150);
définit, dans la première image de vue à vol d'oiseau, une seconde région prédéterminée différente de la première région comme la région cible lors de la détermination selon laquelle il y a une ombre dans la première région et l'ombre est une ombre du propre véhicule (S140) ; et
décale la région cible de la première image de vue à vol d'oiseau dans une direction de déplacement du véhicule de la quantité de déplacement pour ainsi créer une image de vue à vol d'oiseau historique ;
une unité de création d'image d'affichage (29) qui synthétise l'image de vue à vol d'oiseau historique avec la seconde image de vue à vol d'oiseau pour ainsi créer une image de vue à vol d'oiseau d'affichage ; et
une unité de traitement d'affichage (31) qui affiche l'image de vue à vol d'oiseau d'affichage sur le dispositif d'affichage.

2. Dispositif de commande d'affichage selon la revendication 1, dans lequel l'unité de détermination d'ombre de propre véhicule (33) détermine une ombre s'étendant à partir du propre véhicule comme une ombre du propre véhicule.

3. Dispositif de commande d'affichage selon la revendication 2, dans lequel l'unité de détermination d'ombre de propre véhicule (33) détermine que l'ombre est une ombre du propre véhicule lorsqu'une ombre s'étendant à partir du propre véhicule est affichée en continu dans l'image de vue à vol d'oiseau capturée pendant une certaine période de temps.

4. Dispositif de commande d'affichage selon l'une quelconque des revendications 1 à 3, dans lequel l'unité de détermination d'ombre de propre véhicule (33) détermine qu'il y a une ombre dans la première région prédéterminée et que l'ombre n'est pas une ombre du propre véhicule lorsque l'ombre est située à une position distante du propre véhicule.

5. Dispositif de commande d'affichage selon l'une quelconque des revendications 1 à 4, dans lequel l'unité de création d'image d'historique (27) divise la première image à vol d'oiseau en une partie adjacente proche du propre véhicule et une partie distante plus éloignée du propre véhicule que la partie adjacente, et classe une image de la première région et une image de la partie distante comme la seconde région.

6. Procédé de commande d'affichage pour capturer une certaine zone d'imagerie autour d'un propre véhicule et l'afficher sur un dispositif d'affichage dans le propre véhicule, comprenant :
une étape d'acquisition d'image capturée consistant à acquérir des première et seconde images successives à partir d'une caméra montée sur le propre véhicule ;
une étape de conversion de vue à vol d'oiseau consistant à effectuer une conversion de vue à vol d'oiseau de chacune des première et seconde images pour ainsi créer successivement des première et seconde images à vol d'oiseau, respectivement ;
une étape de calcul de quantité de déplacement consistant à calculer une quantité de déplacement du propre véhicule sur la base d'informations de comportement de véhicule indicatives d'un comportement du propre véhicule entrées depuis le propre véhicule ;
une étape de création d'image historique comprenant :
une étape de détermination d'ombre de véhicule consistant à déterminer si :
il y a une ombre dans une première région prédéterminée de la première image de vue à vol d'oiseau ; et
l'ombre du propre véhicule ; et
une étape de correction d'image consistant à :
définir la première région prédéterminée dans la première image de vue à vol d'oiseau comme une région cible lors de la détermination selon laquelle il n'y a pas d'ombre dans la première région prédéterminée ou il y a une ombre dans la première région prédéterminée et l'ombre n'est pas une ombre du propre véhicule ;
définir, dans la première image de vue à vol d'oiseau, une seconde région prédéterminée différente de la première région comme la région cible lors de la détermination selon laquelle il y a une ombre dans la première région et l'ombre est une ombre du propre véhicule ; et
décaler la région cible de la première image de vue à vol d'oiseau dans une direction de déplacement du véhicule de la quantité de déplacement pour ainsi créer une image de vue à vol d'oiseau historique ;
une étape de création d'image d'affichage consistant à synthétiser l'image de vue à vol d'oiseau historique avec la seconde image de vue à vol d'oiseau pour ainsi créer une image de vue à vol d'oiseau d'affichage ; et
une étape de traitement d'affichage consistant à afficher l'image de vue à vol d'oiseau d'affichage sur le dispositif d'affichage.

7. Procédé de commande d'affichage selon la revendication 6, dans lequel l'étape de détermination d'ombre de véhicule détermine qu'il y a une ombre dans la première région prédéterminée et que l'ombre n'est pas une ombre du propre véhicule lorsque l'ombre est située à une position distante du propre véhicule.

8. Procédé de commande d'affichage selon la revendication 6 ou 7, dans lequel l'étape de création d'image d'historique divise la première image à vol d'oiseau en une partie adjacente proche du propre véhicule et une partie distante plus éloignée du propre véhicule que la partie adjacente, et classe une image de la première région et une image de la partie distante comme la seconde région.
